(19) **Europäisches Patentamt**

**European Patent Office**

**Office européen des brevets**

(11) **EP 1 000 830 B1**

(12) **EUROPÄISCHE PATENTSCHRIFT**

(45) Veröffentlichungstag und Bekanntmachung des Hinweises auf die Patenterteilung:
**09.07.2003 Patentblatt 2003/28**

(51) Int Cl.⁷: $\text{B60T 7/04}$, B60T 15/14

(21) Anmeldenummer: **99118005.0**

(22) Anmeldetag: **20.09.1999**

(54) **Bremswertgeber mit integrierter Additionsredundanz**

Brake control adjuster with integrated adding redundancy

Ajusteur de commande de frein à redondance d'addition intégrée

(84) Benannte Vertragsstaaten:
**DE FR IT NL SE**

(30) Priorität: **13.11.1998 DE 19852399**

(43) Veröffentlichungstag der Anmeldung:
**17.05.2000 Patentblatt 2000/20**

(73) Patentinhaber: **WABCO GmbH & Co. OHG**
**30453 Hannover (DE)**

(72) Erfinder:
• **Feldmann, Joachim**
**31535 Neustadt (DE)**
• **Kiel, Bernd**
**31515 Wunstorf (DE)**

(74) Vertreter: **Schrödter, Manfred, Dipl.-Ing.**
**WABCO GmbH & Co. OHG**
**Postfach 91 12 62**
**30432 Hannover (DE)**

(56) Entgegenhaltungen:
**EP-A- 0 447 750          DE-A- 3 308 279**
**DE-A- 19 653 264          US-A- 4 633 757**

**Beschreibung**

Die Erfindung betrifft einen Bremswertgeber mit integrierter Additionsredundanz.

Aus der DE-A1-33 08 279 ist ein Bremswertgeber, dort Motorwagen-Bremsventil genannt, bekannt.

Dieses Bremsventil ist dazu bestimmt, auf dem Zugwagen vorrangig eine elektrische Bremsung durchzuführen. Hierzu ist ein magnetoresistiver Weggeber vorgesehen, der ein Meßsignal für eine elektrisch geregelte Bremse [die Betriebsbremse des Fahrzeuges] abgibt. Dieses Signal ist von der Betätigung einer Trittplatte abhängig. Bei der Trittplatten-Betätigung wird ebenfalls ein Bremsdruck ausgesteuert, wobei dieser pneumatische Kreis den Bremsdruck vorzugsweise nur bei Ausfall des elektrischen Kreises auf die Bremszylinder wirken lässt. Der pneumatische Kreis stellt so eine Redundanz zum elektrischen Kreis dar.

Die bekannte Schrift zeigt also eine mechanisch wirkende Einrichtung zur Erzeugung einer ersten, pneumatischen Bremsdruckkomponente, die vorzugsweise als Redundanz-Druck wirkt und eine Einrichtung zur Erzeugung eines elektrischen Meßsignals für eine zweite, eine elektrische Bremskomponente, die vorrangig durchgeführt wird.

Aus der EP-B1-0 447 750 ist ein Bremsdruckmodulator bekannt, der aus einer zweikreisig angsteuerten Relaisventileinrichtung und einer magnetbetätigten Ventileinrichtung besteht. Die Relaisventileinrichtung ist dabei von einer marktgängigen aufstockenden Bauart, wobei "aufstockend" bedeutet, daß sie bei gleichzeitiger Druckbeaufschlagung ihrer beiden Steuereinrichtungen an ihrem Ausgang einen höheren Druck als bei Druckbeaufschlagung nur einer ihrer Steuereinrichtungen abgibt.

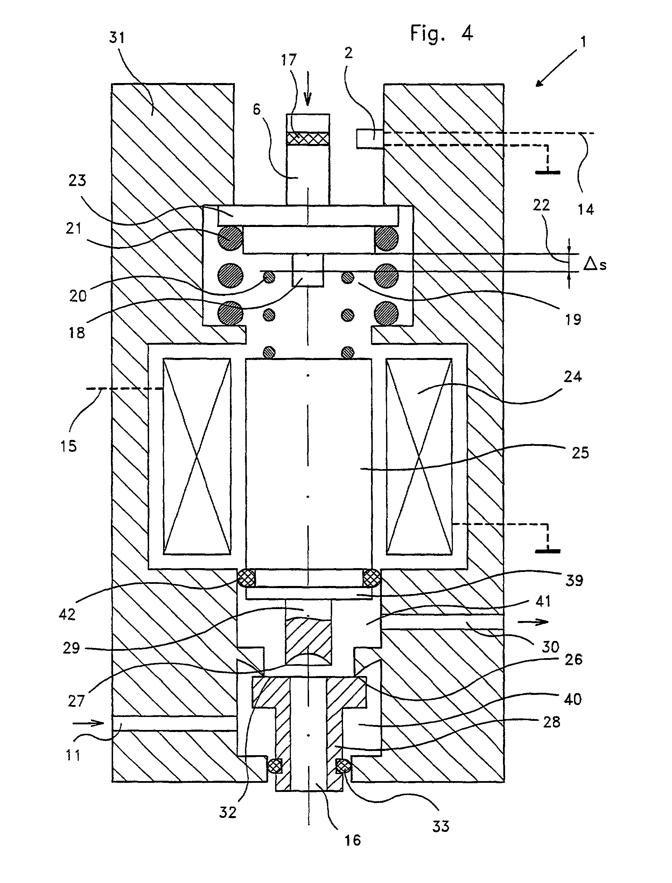

Die magnetbetätigte Ventileinrichtung ist so ausgebildet, daß sie einen von der zugeführten Magnetstromstärke abhängigen Druck aussteuert. Die zweikreisig angesteuerte Relaisventileinrichtung [dort Fig. 4, (44)] wird sowohl von dem von der magnetbetätigten Ventileinrichtung [dort Fig. 4, (40)] ausgesteuerten Druck als auch von dem von einer mechanischen Bremsdrucksteuereinrichtung [dort Fig. 4, (5)] abgegebenen Druck gesteuert. Der von der zweikreisig angesteuerten Relaisventileinrichtung erzeugte Druck stellt den Bremsdruck dar. Die zweikreisig angesteuerte Ventileinrichtung addiert also die Wirkungen der an ihren beiden Eingängen anliegenden Drücke, indem sie einen luftmengenverstärkten Bremsdruck erzeugt, dessen Höhe von der Summe beider Eingangs-Drücke abhängig ist. Diese Ventileinrichtung enthält daher ein Additionsglied zur Summenbildung.

Relaisventile in ihrer üblichen Bauweise sind derart aufgebaut, daß ein Relais-Kolben vorgesehen ist, dessen Kolbenfläche als Wirkfläche für einen an ihrem pneumatischen Steuereingang angelegten Vordruck dient; durch die Auslenkungen des Relais-Kolbens wird ein Belüftungs- und ein Entlüftungsventil derart betätigt, daß die Abschlußstellung für beide Ventile erreicht ist, wenn der ausgesteuerte Druck gleich dem Vordruck geworden ist.

Bei einem zweikreisig angesteuerten Relaisventil sind zwei Steuereingänge vorgesehen, und die an diesen Steuereingängen angelegten Vordrücke wirken je über eine Wirkfläche auf den Relais-Kolben ein. Wesentlich ist, daß auf den Relais-Kolben eine Kraft ausgeübt wird, die, bei Annahme gleicher Wirkflächen für beide Steuereingänge, der Summe dieser beiden Vordrücke entspricht. Der Relais-Kolben stellt daher das Additionsglied dar; die Addition wird ausgeführt, indem sich am Relais-Kolben ein Gleichgewicht zwischen der auf den Kolben einwirkenden Kraft des ausgesteuerten Druckes und der auf ihn einwirkenden Kräfte durch die beiden Vordrücke einstellt.

Die beiden an den zwei Eingängen [dort Fig. 4, (42, 43)] der zweikreisig angesteuerten Relaisventileinrichtung anliegenden Drücke stellen also die zu addierenden Vordrücke dar; die entsprechenden Pneumatik-Leitungen von den Einheiten [dort Fig. 4, (40), (5)], die diese Drücke erzeugen, dienen zur Luftübertragung, wobei der Pneumatik-Druck hier die Funktion einer Kraftübertragung übernimmt.

Weiter gibt bei der EP-B1-0 447 750 ein dem Bremsdruckmodulator vorgeschalteter und diesen steuernder Bremswertgeber bei Betätigung durch den Fuß des Fahrers an einem ihm zugehörigen elektrischen Teil ein von der Betätigungskraft oder von dem Betätigungsweg abhängiges elektrisches Betätigungssignal an die magnetbetätigte Ventileinrichtung ab; gleichzeitig steuert der Bremswertgeber an seinem Druckteil, welches die erwähnte mechanische Bremsdrucksteuereinrichtung darstellt, aus einem Druckvorrat den ebenfalls von den genannten Betätigungsgrößen abhängigen redundanten Bremsdruck aus.

Der von dem Bremsdruckmodulator abgegebene Bremsdruck setzt sich also aus einer auf den redundanten Bremsdruck und aus einer auf die Magnetbetätigung zurückgehenden Bremsdruckkomponente zusammen. Es gehört zur EP-B1-0 447 750 , die Magnetstromstärke so einzustellen, daß die auf die Magnetbetätigung zurückgehende Bremsdruckkomponente gerade den Unterschied zwischen der Bremsdruckanforderung, wie er der Fahrer-Betätigung entspricht, und der auf den redundanten Bremsdruck zurückgehenden Bremsdruckkomponente ausmacht.

Bei einer Realisierung des Prinzips der Additionsredundanz nach der EP-B1-0 447 750 ist es erforderlich, daß um den Bremswertgeber [dort Fig. 4, (5, 6, 7)] eine Vielzahl von unterschiedlichen Komponenten anzuordnen ist, um die Funktion sicherzustellen. Es ist weiter nachteilig, daß, wie erläutert, pneumatische Verbindungen vorzusehen sind, die lediglich der Kraftübertragung an diejenige Einrichtung dienen, welche die Funktion der Addition durchführt. Dies trifft in besonderer Weise auf die Pneumatikleitung zu, die den Redundanz-Druck, der im Bremswertgeber aufgrund der Fahrer-Betätigung erzeugt wird, vom Bremswertgeber zu der als zweikreisig ansteuerbaren Relaisventileinrichtung ausgestalteten Additionseinrichtung überträgt [dort Fig. 4, (5) nach (9)].

Aus dem U.S. Patent 4,633,757 ist ein Bremskraftverstärkungs-System [brake booster system] bekannt, bei dem über einen Sensor [dort (1)] die vom Fahrer auf ein Bremspedal eingebrachte Betätigungskraft gemessen wird und aus diesem Meßwert unter Verwendung eines Funktionsgenerators [function generator (9)] eine Soll-Verzögerung festgelegt wird.

Die Ist-Verzögerung wird über einen weiteren Sensor [sensor (3)] ermittelt und Soll- und Ist-Verzögerung werden in einem Vergleicher [comparator (10)] verglichen und aus diesem die Regelabweichung bedeutenden Vergleichswert wird ein Ventil-Steuerungssignal [valvecontrol signal (c)] abgeleitet, welches ein elektromechanisches Ventil [valve (7)] derart steuert, daß Druck aus einer Druckquelle [source (6)] über eine Leitung [dort(8)] in die Arbeitskammer [working fluid pressure chamber (5b)] des Bremskraftverstärkers [booster (5)] eingeleitet wird.

Im Bremskraftverstärker wirkt die auf diese Weise mit Druck beaufschlagbare Arbeitskammer auf eine bewegliche Wand [movable wall (5d)] ein, gegenüber einer auf der der Arbeitskammer entgegengesetzten Seite angeordneten Referenzdruckkammer [reference fluid pressure chamber (5a)].

Durch die Druckdifferenz zwischen Arbeitskammer und Referenzdruckkammer wird die bewegliche Wand ausgelenkt und mit ihr wird einen Betätigungsstange [output rod (28)] betätigt, welche ihrerseits mit dem Kolben eines Hauptbremszylinders [master brake cylinder (4)] verbunden ist, welcher hydraulische Bremskraftflüssigkeit in die Bremsen verschiebt und somit eine Bremskraft auf die Hydraulikbremsen einprägt.

Mit diesem Bremsverstärker-System wird die Einstellung einer Soll-Bremskraft erreicht, indem die aktuelle Bremskraft zu einer der Bremspedal-Betätigungskraft entsprechenden Soll-Verzögerung umgewandelt wird, welche unabhängig vom Gewicht des Fahrzeugs ist.

Bei intakter Druckquelle [source (6)] arbeitet das Bremskraftverstärker-System im Druckluft-Modus [positive pressure mode], während im Fehlerfall auf den üblichen Vakuum-Modus [vacuum mode] umgeschaltet wird; zu dieser Umschaltung sind magnetbetätigte Ventilmittel [solenoid (45), valve (36)] vorgesehen.

Der Erfindung liegt deshalb die Aufgabe zugrunde, einen Bremswertgeber der eingangs genannten Art derart auszubilden, daß die steuernden Funktionen für die Additionsredundanz in ihm enthalten sind. Vor allem soll gewährleistet sein, daß Pneumatikverbindungen, die ausschließlich zur Kraft-Übertragung einer von der Fußkraft oder von dem Fußweg abgeleiteten Kraftkomponente an eine die Addition durchführende Einrichtung dienen, nicht erforderlich sind.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Durch die Pneumatik-Vereinfachung können auch Bauteile wie drucksteuernde Ventileinrichtungen eingespart werden. Durch das Entfallen von Komponenten entsteht neben der Kostenverringerung auch der Vorteil, daß die Funktionssicherheit erhöht wird.

Ein weiterer Vorteil besteht darin, daß Bauraum und Gewicht eingespart werden; die Bauraum-Einsparung hat zur

Folge, daß man den Bremswertgeber mit seinen peripheren Komponenten vorteilhaft zu einer Pedalbox integrieren kann, die als vorgefertigter Systemträger im Fahrzeug eingebaut ist, und vorproduziert werden kann.

Bei einer Weiterbildung der Erfindung ist man bei der Kraft-Weg-Auslegung zum Erreichen eines gewünschten "Pedal-Feelings" nicht mehr auf Beschränkungen angewiesen, die durch das bisher konstante Arbeitsvermögen der Kombination Bremswertgeber/Pedal entstehen. Die Erfindung bietet hier den Vorteil, daß dieses Arbeitsvermögen variabel ist und man so Kundenwünschen bei der Auslegung in weiten Grenzen frei entegegenkommen kann.

Die Erfindung wird im folgenden anhand eines Ausführungsbeispiels, das in den Zeichnungen dargestellt ist, näher erläutert.

In den Zeichnungen sind, soweit möglich, für gleichartige Teile identische Bezugszeichen verwendet, so daß mit der Erläuterung eines Teils in einer Zeichnung dieses Teil auch in anderen Zeichnungen beschrieben ist.

In den Zeichnungen sind pneumatische Verbindungen als durchgezogene und elektrische Verbindungen als gestrichelte Linie gezeichnet.

Dabei zeigen:

Fig. 1 den Bremswertgeber mit seinen Funktionseinheiten in einer Bremsanlage,

Fig. 2 eine Ausführungsform des Bremswertgebers, bei der zur Erzeugung des Bremsdruckes die Summe aus zwei Kräften gebildet wird, nämlich der Summe aus einer der Fahrer-Betätigung entsprechenden Kraft und einer Magnetkraft eines Proportionalventiles, welches den Bremsdruckmodulator bildet,

Fig. 3 eine Ausführungsform des Bremswertgebers, bei der zur Erzeugung des Bremsdruckes die Summe aus zwei Kräften gebildet wird, nämlich der Summe aus der der Fahrer-Betätigung entsprechenden Kraft und einer Kraft, welche aus dem Druck abgeleitet ist, der dem Bremswertgeber vom Bremsdruckmodulator zugeführt wird, und bei dem das Ventil als luftmengenverstärkendes Relaisventil ausgebildet ist,

Fig. 4 einen Bremswertgeber nach Fig. 2, bei dem der Magnetanker des Proportionalventils das Additionsglied darstellt,

Fig. 5 einen Bremswertgeber entsprechend dem Prinzip von Fig. 3, bei dem der Ventilkolben des Ventils das Additionsglied darstellt, welches jedoch nicht in erster Linie als Relaisventil ausgebildet ist,

Fig. 6 Kennlinien der in Abhängigkeit von der Fahrer-Betätigung ausgesteuerten Drücke bei einem Bremswertgeber nach Fig. 4.

Entsprechend der Vorschriften, die für Fahrzeuge im öffentlichen Straßenverkehr dienen, müssen Fahrzeuge mit zwei unabhängig voneinander wirkenden Bremskreisen ausgerüstet sein.

Bei druckluftgebremsten Nutzfahrzeugen mit zwei gebremsten Achsen ist die Aufteilung der unabhängig wirkenden Bremskreise üblicherweise derart vorgenommen, daß ein erster Bremskreis für die Räder der Vorderachse und ein zweiter Bremskreis für die Räder der Hinterachse vorgesehen ist.

Werden diese Fahrzeuge konventionell gebremst, so besteht der Bremswertgeber aus einem Motorwagen-Bremsventil, z. B. nach der Schrift DE-A1-42 32 146 , mit zwei unabhängig voneinander wirksamen Ventileinrichtungen, wobei eine Ventileinrichtung einen Druck aussteuert, der auf die Bremszylinder der Vorderachse wirkt, und die andere Ventileinrichtung einen auf die Bremszylinder der Hinterachse wirkenden Druck aussteuert. Die Höhe des ausgesteuerten Druckes wird durch den Weg oder die Kraft des vom Fahrer betätigten, auf das Bremsventil einwirkenden Bremspedals bestimmt.

Bei Fahrzeugen, die im Gegensatz zu einer konventionellen Luftdruckbremse über eine elektronische Bremswertregelung verfügen, wird vom Bremswertgeber das elektrische Signal einer vom Fahrer vorgegebenen Bremswertanforderung erzeugt. Dieses Signal wird von der Fahrzeugelektronik ausgewertet; es bestimmt zusammen mit anderen Größen, wie z. B. der Beladung, die Bremskraftverteilung auf die Achsen. Auf diese Weise werden durch die Fahrzeugelektronik elektronische Steuersignale gebildet, die zur Ansteuerung von Bremsdruckmodulatoren für die Vorder- und die Hinterachse dienen.

Aus Sicherheitsgründen ist bei Fahrzeugen mit elektronischer Bremswertregelung eine Redundanz in Form eines nur mit mechanischen Mitteln erzeugten Bremsdruckes vorzusehen. Bei einem Fehler in der Elektronik, der z. B. durch den Ausfall eines Elektronik-Bauteils bedingt ist, wird bei einer Bremsung dieser Redundanz-Druck wirksam und stellt die Bremsung des Fahrzeuges sicher.

Ein Redundanz-Druck kann nach dem Prinzip der geschalteten Redundanz oder nach dem Prinzip der Additionsredundanz wirksam werden. Bei einer geschalteten Redundanz wird der Redundanz-Druck im Rahmen einer Bremswertanforderung ständig erzeugt und wird bei einem Elektronik-Ausfall statt des vom Bremsmodulator erzeugten Bremsdruckes verwendet. Hierzu ist es jedoch erforderlich, den letztgenannten Druck über ein elektrisch betätigtes Ventil abzuschalten und den Redundanz-Druck zuzuschalten.

Alternativ zu dieser Ventil-Umschaltung kann bei der geschalteten Redundanz auch der zeitlich voreilende Druck des Bremsdruckmodulators als Kriterium benutzt werden; z. B. bleibt, solange der vom Bremsdruckmodulator erzeugte Druck mindestens 0,2 bar beträgt, der Redundanz-Druck abgehalten, ist dies nicht der Fall, so wird die Abhaltung aufgehoben und der Redundanz-Druck greift ein.

Das Verfahren der geschalteten Redundanz setzt also voraus, daß eine ausgefallene oder im Ausfall begriffene Elektronik mindestens noch in der Lage ist, bestimmte Umschalt- oder Steuervorgänge sicher vorzunehmen; in der Elektronik sind hierzu besondere Vorkehrungen zu treffen, die nach Möglichkeit alle Eventualitäten abdecken. Um zu zeigen, wie aufwendig dies werden kann, sei auf einen möglichen Fehlerfall hingewiesen: Wenn z. B. ein Drucksensor statt eines tatsächlich vorliegenden Druckes von 0,2 bar einen Meßwert liefert, der einem Druck von 10 bar entspricht, so geht die Fahrzeugelektronik davon aus, daß eine Vollbremsung stattfindet, während das Fahrzeug in Wirklichkeit praktisch ungebremst weiterfährt. Natürlich kann auch dieser Fehlerfall durch z. B. doppelte Auslegung von Sensoren abgefangen werden, was jedoch wiederum die Herstellkosten erhöht.

Dagegen ist bei dem Prinzip der Additionsredundanz nach der Schrift EP-B1-0 447 750 der Redundanz-Druck als additive Komponente bei jeder Bremsung aktiv mit eingebunden. Fällt die Elektronik aus, so wirkt der Redundanz-Druck direkt auf die Brems-Zylinder ein, ohne daß irgendwelche Umschaltvorgänge durchgeführt werden müssen; das Verfahren ist eigensicher und bietet damit gegenüber dem Verfahren der geschalteten Redundanz einen höheren Grad an Sicherheit.

Eine Redundanz kann ein- oder zweikreisig ausgelegt sein. Bei einkreisiger Redundanz ist nur einer der beiden Bremskreise redundant ausgelegt -üblicherweise ist dies der Vorderachs-Bremskreis- , bei zweikreisiger Redundanz sind beide Bremskreise redundant ausgelegt.

Bei einkreisiger Redundanz auf dem Vorderachs-Bremskreis bietet sich das Verfahren der Additionsredundanz besonders an. Die Vorderachse ist durch das Gewicht des Motor-Getriebeblockes ständig belastet und weist dadurch ein wesentlich günstigeres Last-/Leer-Verhältnis auf als die Hinterachse, bei der dieses Verhältnis im wesentlichen durch die Zuladung gegeben ist. Die unten erläuterten Auslegungsgesichtspunkte für die Additionsredundanz lassen sich daher bei der Vorderachse besonders gut erfüllen.

Bei zweikreisiger Redundanz kann für die Hinterachse ebenfalls das Prinzip der Additionsredundanz zugrundegelegt werden; da jedoch, wie erwähnt, die Auslegung schwieriger ist, kann auch für die Hinterachse das Prinzip der geschalteten Redundanz eingesetzt werden; dies vor allem dadurch, weil man ja auf eine sehr sichere Vorderachsen-Redundanz zurückgreifen kann und die Hinterachs-Auslegung damit weniger kritisch ist.

Das letztgenannte Argument kann aber auch dazu führen, auf eine Zweikreisigkeit der Redundanz generell zu verzichten und nur eine sichere einkreisige Redundanz an der Vorderachse vorzusehen. Da neben den rein sicherheitstechnischen Gegebenheiten auch Kostengesichtspunkte eine Rolle spielen, ist davon auszugehen, daß sich die Technik in Richtung der einkreisigen Vorderachs-Redundanz weiterentwickeln und die zweikreisige Redundanz an Bedeutung verlieren wird. Aus diesem Grund wird die Erfindung im Schwerpunkt in ihrer Anwendung auf eine einkreisige Redundanz erläutert, und es wird unten ergänzt, wie sie sich auch auf eine zweikreisige Redundanz erweitern läßt.

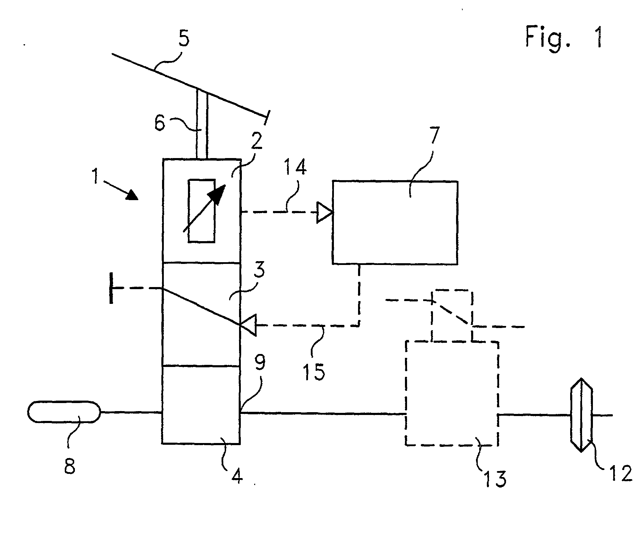

Fig. 1 zeigt, wie die Funktionseinheit des Bremswertgebers (1) mit anderen Einheiten der Bremsanlage verbunden ist.

Der Bremswertgeber (1) ist vom Fahrer über ein Bremspedal (5), das auf einen Betätigungsstößel (6) einwirkt, zu betätigen. Eine Betätigung wird in der Sensoreinrichtung (2) elektrisch erfaßt, und das entsprechende Sensor-Meßsignal wird über eine elekrische Leitung (14) an einen Eingang einer elektronischen Fahrzeug-Steuereinrichtung (7) geführt. Aufgrund dieses Sensor-Meßsignales wird in der Fahrzeug-Steuereinrichtung ein elektrisches Signal zur Aussteuerung des Bremsdruckes gebildet; dieses Steuersignal wird über eine elektrische Verbindung (15) einem im Bremswertgeber integrierten magnetbetätigten Bremsdruckmodulator (3) zugeführt. Der Bremsdruckmodulator (3) erzeugt aufgrund des elektrischen Steuersignals einen Steuerdruck, der in einem Relaisventil (4) luftmengenverstärkt wird. Der Bremswertgeber (1) ist über eine Pneumatikleitung mit einem Luftvorrat (8) verbunden.

Am pneumatischen Ausgang (9) des Relaisventils (4) wird der Bremsdruck ausgegeben; der Ausgang ist über Pneumatikleitungen mit dem Bremszylinder (12) verbunden. Zwischen dem Pneumatikausgang (9) und dem Bremszylinder (12) ist üblicherweise ein ABS-Regelventil (13) zur bremsschlupfgeregelten Reduzierung des Bremsdruckes dazwischengeschaltet. Bezüglich der hier betrachteten Vorderachse sind die Bremszylinder üblicherweise zweifach vorhanden; das ABS-Regelventil kann einfach [Achsregelung] oder zweifach [Radregelung] vorhanden sein.

Entsprechend dem Prinzip der Additionsredundanz wird durch die Auslenkung des Betätigungsstößels (6) zweierlei bewirkt:

Es wird erstens, wie erläutert, auf elektrischem Wege über den Bremsdruckmodulator eine elektrische Druckkomponente erzeugt.

Zweitens wird auf mechanischem Wege eine mechanische Druckkomponente erzeugt.

Über eine im Bremswertgeber (1) enthaltene Additionseinrichtung werden die elektrische und die mechanische Druckkomponente addiert, und dieser Summendruck stellt den vom Bremswertgeber abgegebenen Bremsdruck dar. Fällt die elektrische Druckkomponente aus, so bildet die mechanische Druckkomponente automatisch den Bremsdruck.

Streng genommen, werden in der Additionseinrichtung physikalische Größen addiert, die der Wirkung der elektrischen bzw. der mechanischen Druckkomponente entsprechen, wobei eine Druckkomponente real oder auch virtuell [sie ist "als Druck" an keiner Stelle des Bremswertgebers meßbar] vorhanden sein kann.

Die Additionseinrichtung zur Erzeugung des Bremsdruckes weist daher zwei Eingänge auf; an diesen Eingängen werden physikalische Größen, die den Bremsdruckkomponenten entsprechen, angelegt. Ein Eingang dient zur Anlage einer ersten physikalischen Größe, die von der Fahrer-Betätigung abgeleitet ist [mechanische Druckkomponente], der andere Eingang dient zur Anlage einer zweiten physikalischen Größe, die durch das erläuterte Steuersignal der Fahrzeug-Steuereinrichtung für den Bremsdruckmodulator beschrieben ist [elektrische Druckkomponente]. Wie unten erläutert, können physikalische Größen, je nach Ausführungsform, als Kraft oder Druck vorliegen.

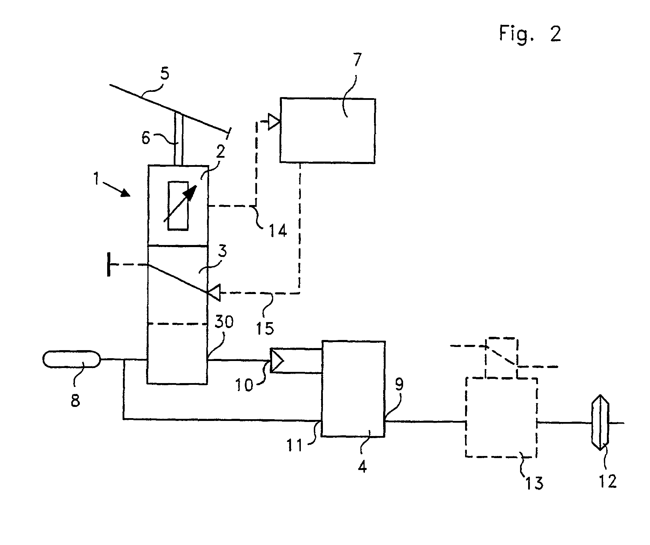

In der Ausführung des Bremswertgebers nach Fig. 2 ist der Bremsdruckmodulator (3) als magnetbetätigtes Proportionalventil ausgebildet. Bei dieser Ausführungsform stellen die erste und die zweite physikalische Größe eine Kraft dar [vgl. hierzu die Erläuterungen im Zusammenhang mit Fig. 4].

Das luftmengenverstärkende Relaisventil (4) ist als externes Gerät außerhalb des Bremswertgebers (1) angeordnet. Das als Bremsdruckmodulator wirkende Proportionalventil (3) erzeugt einen Steuerdruck, der über einen Ausgang (30) des Bremsdruckmodulators (3) dem Relaisventil (4) an einem Steuerdruck-Eingang (10) zugeführt wird; der Luftvorrat (8) ist an einen Eingang (11), dem Vorratsdruck-Eingang, angeschlossen.

Indem das Relaisventil mit seiner entsprechenden Nennweite separat angeordnet ist, kann der Bremswertgeber selbst als Gerät mit kleinem Bauvolumen aufgebaut werden.

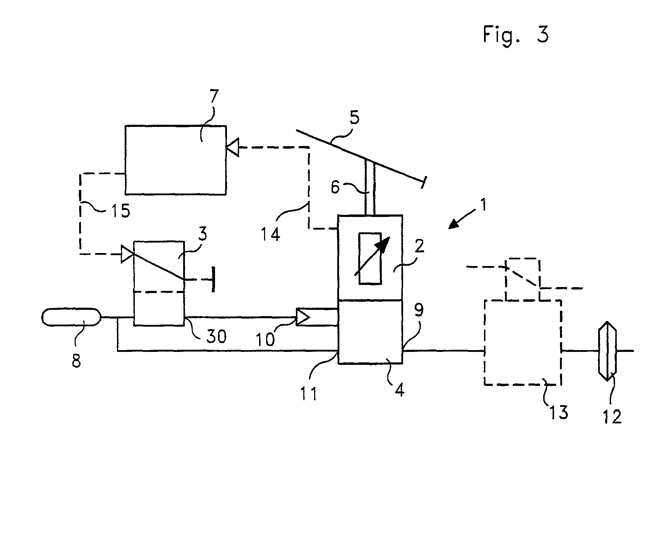

In der Ausführungsform nach Fig. 3 ist der Bremsdruckmodulator als externes Gerät vorgesehen, jedoch ist das Relaisventil (4) im Bremswertgeber (1) integriert.

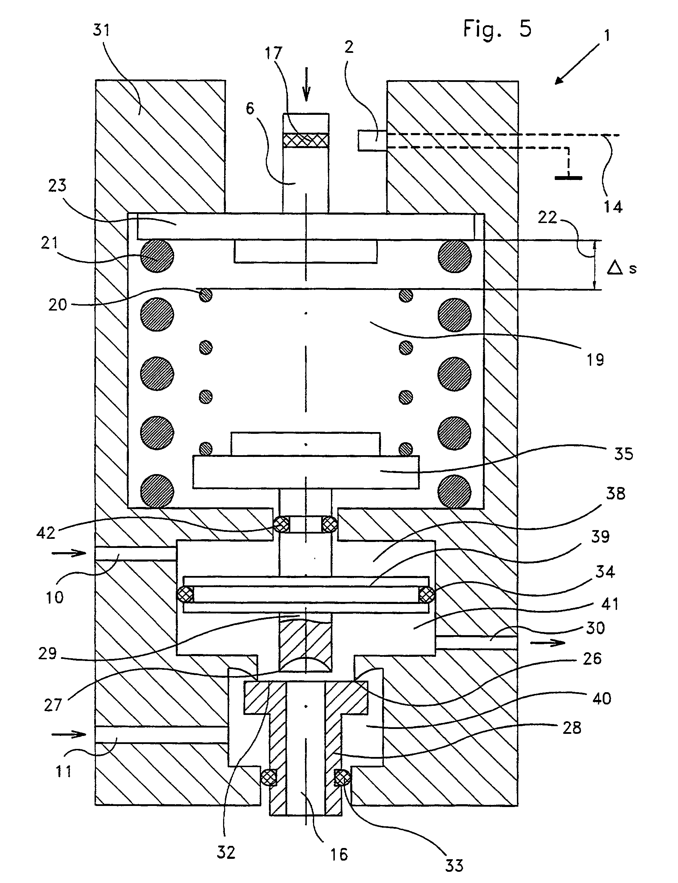

Der vom Bremsdruckmodulator (3) erzeugte Steuerdruck wird über den Steuerdruck-Ausgang (30) dem Steuerdruck-Eingang (10) des Relaisventils (4) zugeführt. Bei dieser Ausführungsform besteht die erste physikalische Größe aus einer Kraft und die zweite physikalische Größe aus einem Druck [vgl. hierzu die Erläuterungen im Zusammenhang mit Fig. 5].

Der Bremsdruckmodulator (3) kann auch bei dieser Ausführungsform als magnetbetätigtes Proportionalventil vorgesehen werden.

Alternativ kann der Bremsdruckmodulator (3), wie dies als solches bekannt ist, auch aus schaltenden Magnetventilen aufgebaut sein, wozu mindestens zwei Ventile benötigt werden. Mit einer derartigen Ventilkombination wird der im Bremsdruckmodulator (3) gebildete Steuerdruck über ein Belüftungsventil im Druck angehoben und über ein Entlüftungsventil im Druck abgesenkt. Das Belüftungsventil verbindet den Steuerdruck-Ausgang (30) im geschalteten Zustand mit dem Vorratsdruck, und das Entlüftungsventil verbindet im geschalteten Zustand den Steuerdruck-Ausgang (30) mit der Atmosphäre. Durch wechselseitiges Takten beider Ventile wird der gewünschte Steuerdruck erreicht.

Das Takten wird durch die Fahrzeug-Steuereinrichtung durchgeführt, die den gewünschten Steuerdruck in einer geschlossenen Regelschleife einstellt, indem sie über einen Drucksensor den augenblicklichen Steuerdruck mißt und das Belüftungs- bzw. Entlüftungsventil je nach der vorliegenden Regelabweichung ansteuert. Geeignet hierfür sind schnellschaltende Magnetventile, die dadurch eine vergleichsweise geringe Nennweite haben. Zur Erhöhung der Luftmenge ist es daher möglich, statt eines Belüftungsventils z. B. zwei Belüftungsventile und für das Entlüftungsventil z. B. zwei Entlüftungsventile vorzusehen. Die elektrische Verbindung (15) besteht dann aus einer Anzahl von Leitungen, die für die Ansteuerung dieser Belüftungs- und Entlüftungsventile erforderlich sind.

Bei einer Ausführungsform des Bremsdruckmodulators (3) mit getakteten Magnetventilen sind die vergleichsweise geringen Kosten von schaltenden Magnetventilen vorteilhaft.

Da schaltende Magnetventile nur einen geringen Bauraum benötigen, können diese auch in den Bremswertgeber eingebaut sein. Bei einer solchen Ausführung ist es zudem möglich, auch zumindest denjenigen Teil der Fahrzeug-Steuereinrichtung (7), welcher der Bremsung zugeordnet ist, indem er das Signal für die elektrische Druckkomponente erzeugt, mit dem Bremswertgeber (1) baulich zu vereinigen.

In Fig. 4 ist die praktische Ausführungsform eines Bremswertgebers nach Fig. 2 gezeigt. Die elektrische Sensoreinrichtung (2) zur Erfassung des Betätigungsweges am Betätigungsstößel (6) ist als magnetresistiver Sensor aufgebaut. Dieser arbeitet zusammen mit einem im Betätigungsstößel (6) angebrachten Dauermagneten (17); der Sensor bestimmt die Position, indem er den Winkel der vom Dauermagneten (17) erzeugten Feldlinien auswertet. Alternativ kann auch ein beliebig anderer Wegsensor eingesetzt werden. Der Betätigungsstößel (6) ist mit einer Druckplatte (23) verbunden.

Dem Betätigungsmechanismus ist außerdem eine in einem Federraum (19) angeordnete erste Feder (20) und eine zweite Feder (21) zuzurechnen, wobei die zweite Feder (21) die Druckplatte (23) gegenüber dem Gehäuse (31) federnd abstützt.

Dem magnetischen Teil des Proportionalventils sind zuzurechnen: Eine Magnetspule (24) und ein Magnetanker (25); dem Ventilteil des Proportionalventils sind zuzuordnen: Ein auf der Verlängerung des Magnetankers (25) angebrachter Ventilkolben (39), ein Ventilkörper (28) mit einer Dichtfläche (32), ein Vorratsluft-Druckraum (40), ein Bremsluft-Druckraum (41) [für den Steuer-Bremsdruck], eine gehäusefeste umlaufende Dichtkante (26), die mit der Dichtfläche (32) einen Belüftungs-Dichtsitz bildet [in der dargestellten Position ist der Belüftungs-Dichtsitz geschlossen] und eine am Ende des Betätigungselementes (29) angebrachte umlaufende Dichtkante (27), welche mit der Dichtfläche (30) einen Entlüftungs-Dichtsitz bildet [in der dargestellten Position ist der Entlüftungs-Dichtsitz geöffnet].

Der Vorratsluft-Druckraum (40) ist über die im Ventilkörper (28) angebrachte Dichtung (33) zur Atmosphäre hin abgedichtet und der Bremsluft-Druckraum (41) dichtet sich über die Dichtung (42) gegenüber dem im Bereich des Magnetspulen-Magnetankersystems (24, 25) und des Federraumes (19) herrschenden Atmosphärendruck ab.

Die zweite Feder (21) wirkt als Rückstellkraft für den Betätigungsweg des Betätigungsstößels (6) und bestimmt über das Hebelverhältnis des Bremspedals die vom Fahrer bei einer bestimmten Bremsung aufzubringende Fußkraft. Da die zweite Feder (21) als im Vergleich zur ersten Feder (20) starke Feder gewählt ist, ist der Einfluß der ersten Feder (20) vernachlässigbar und die Rückstellkraft ist nur durch den Betätigungsweg und die Federkonstante der zweiten Feder (21) bestimmt. Durch die Verwendung von zwei Federn ist eine Trennung von Funktionen vorgesehen: Die erste Feder (20) dient zur pneumatischen Aussteuerung der erlaubten mechanischen Druckkomponente und die zweite Feder (21) zur Realisierung eines bestimmten "Bremsen-Feelings" für den Fahrer.

Zur Erläuterung der Funktionsweise wird zunächst davon ausgegangen, daß der von der Fahrzeug-Steuereinrichtung über die Leitung (15) eingespeiste Magnetstrom gleich Null ist und daher keine Magnetkraft auf den Magnetanker (25) ausgeübt wird. Die Position der Bauteile im Bremswertgeber entsprechen dem unbetätigten Zustand; in diesem Zustand wird der Ventilkörper (28) durch den im Vorratsluft-Druckraum (40) herrschenden Druck über seine wirksame Ringfläche auf der dem Magnetanker (25) zugewandten Seite mit seiner Dichtfläche (32) gegen die Dichtkante (26) gepreßt, so daß das Einlaßventil geschlossen ist. Der Bremsluft-Druckraum (41) ist in diesem Zustand über die Entlüftung (16) entlüftet, so daß kein Steuer-Bremsdruck ausgegeben wird.

Die erste Feder (20) weist gegenüber der zweiten Feder (21) eine Baulängenverkürzung Δs (22) auf. Dies bedeutet, daß bei sehr kleinen Betätigungswegen zwar eine Rückstellkraft auf den Betätigungsstößel (6) ausgeübt wird, jedoch die Position des Magnetankers (25) unverändert bleibt und so, wie im unbetätigten Fall, noch kein Steuer-Bremsdruck gebildet wird. Erst wenn durch den Betätigungsweg des Betätigungsstößels (6) der "Leerweg Δs" (22) überwunden ist, legt sich die erste Feder (20) an die Unterkante der Druckplatte (23) an, und bei einer weiteren Vergrößerung des Betätigungsweges wird über die erste Feder (20) eine Kraft auf den Magnetanker (25) ausgeübt, wodurch dieser in Richtung des Ventilkörpers (28) verschoben wird.

Mit der Verschiebung kommt die Entlüftungs-Dichtkante (27) mit der Dichtfläche (30) zur Anlage. Die von der ersten Feder (20) erzeugte Kraft wirkt nun auf den Ventilkörper (28), die Dichtfläche (32) wird von der Belüftungs-Dichtkante (26) abgehoben, und es strömt Luft aus dem Vorratsluft-Druckraum (40) in den Bremsluft-Druckraum (41).

Über die wirksame Ringfläche des Ventilkolbens (39) übt der sich aufbauende Druck im Bremsluft-Druckraum (41) eine Kraft auf den Magnetanker (25) aus, welcher der von der zweiten Feder (20) erzeugten Kraft entgegenwirkt. Sobald die entgegenwirkende Kraft gleich der Federkraft geworden ist, wird das Betätigungselement (29) in Gegenrichtung zur Federkraft zurückgedrängt. Bei dieser Zurückdrängung folgt der Ventilkörper (28), dessen Dichtfläche (32) noch an der Entlüftungs-Dichtkante (27) anliegt, dieser Bewegung, so daß auch die Belüftungs-Dichtkante (26) mit der Dichtfläche (32) wieder zum Anliegen kommt [bei dieser Betrachtung der generellen Funktionsweise bleiben mögliche Einflüsse durch die Reibung unberücksichtigt]. Es ist somit der Zustand erreicht, daß sowohl der Belüftungs- wie der Entlüftungs-Dichtsitz geschlossen sind und im Bremsluft-Druckraum (41) ein Druck ausgesteuert ist, der proportional ist zu dem von der ersten Feder (20) aufgrund des Hooke'schen Gesetzes auf den Magnetanker (25) ausgeübten Kraft.

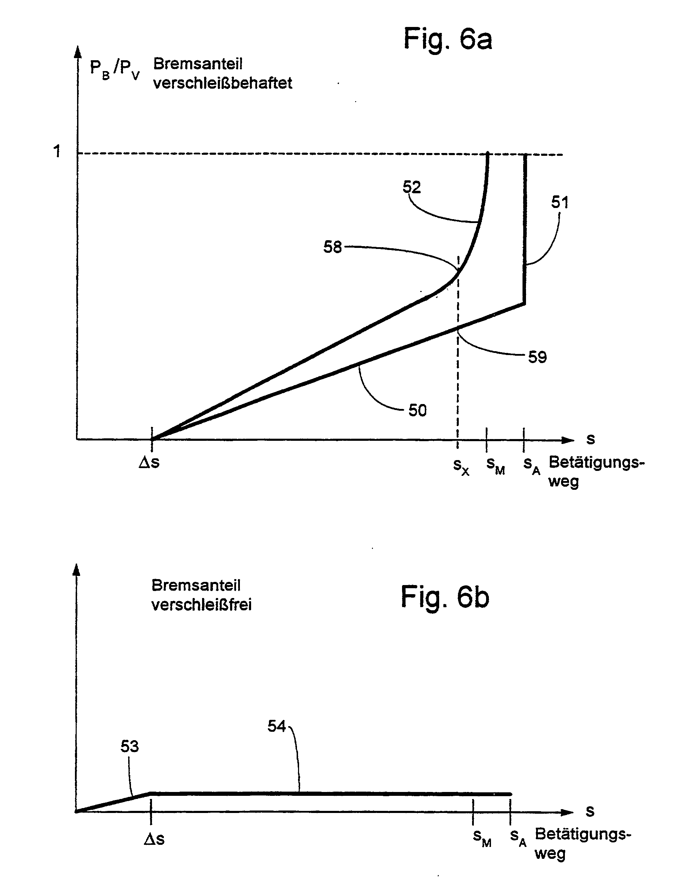

Da, beginnend mit einem Betätigungsweg von Δs die federbedingte Druckaussteuerung einsetzt, ergibt sich für die Kennlinie der mechanischen Druckkomponente ein Geradenstück, dessen Steigung durch die Federkonstante der ersten Feder (20) und die wirksame Ringfläche des Betätigungskolbens (39) bestimmt ist; dieses Geradenstück ist in Fig. 6a unter dem Bezugszeichen (50) dargestellt.

Wird, ausgehend von einem bestimmten Betätigungsweg, dieser Weg reduziert, so ist zum Zeitpunkt der Reduzierung der im Bremsluft-Druckraum (41) ausgesteuerte Bremsdruck zu hoch, so daß der Ventilkolben (39) gegen die nachlassende Federkraft in Richtung der ersten Feder (20) verschoben wird. Hierbei hebt die Entlüftungs-Dichtkante (27) von der Dichtfläche (32) ab, so daß Luft aus dem Bremsluft-Druckraum (41) über die Entlüftung (16) in die Atmosphäre abgeblasen wird. Die Entlüftung hält solange an, bis der im Bremsluft-Druckraum (41) vorhandene Druck dem reduzierten Betätigungsweg entspricht. Mit der Druckreduzierung verschiebt sich das Betätigungselement (29) in Richtung des Ventilkörpers (28), und zum Zeitpunkt des neuen Gleichgewichtes zwischen der Federkraft des reduzierten Betätigungsweges und der gegenwirkenden Kraft durch Druckeinwirkung auf den Ventilkolben (39) setzt die Entlüftungs-Dichtkante (27) wieder auf der Dichtfläche (32) auf, womit die Abschlußstellung erreicht ist.

So folgt im Bremsluft-Druckraum (41) der ausgesteuerte Druck kontinuierlich dem Betätigungsweg des Betätigungsstößels (6). Dieser ausgesteuerte Druck stellt die oben erwähnte mechanische Druckkomponente dar.

Wird über die elektrische Verbindung (15) ein Magnetstrom eingespeist, so wirkt entsprechend der Größe des Magnetstromes auf den Magnetanker (25) eine Kraft ein. Der Magnetanker (25) stellt eine Additionseinrichtung dar, bei der erstens ein Eingang für eine erste physikalische Größe vorgesehen ist, die entsprechend den Erläuterungen der Funktion der ersten Feder (20) vom Betätigungsweg abgeleitet ist und bei der zweitens ein Eingang für eine zweite physikalische Größe vorgesehen ist, die entsprechend dem über die elektrische Verbindung (15) eingespeisten Magnetstrom von einem Ausgang der Fahrzeug-Steuereinrichtung bestimmt ist. Beide physikalischen Größen werden in dem als Additionsglied wirkenden Magnetanker (25) als Kräfte addiert; für den Fall des Ausführungsbeispiels nach Fig. 4 stellen daher sowohl die erste als auch die zweite physikalische Größe eine Kraft dar.

Bei dem vorstehend erwähnten Motorwagen-Bremsventil nach der DE-A1-42 32 146 ist eine Feder vorgesehen [dort Gummi-Abstufungsfeder (3)], die im Zusammenwirken mit einem Kolben [dort erster Kolben (2)] die pneumatische Aussteuerung des Bremsdruckes bewirkt. Im folgenden werden einige grundlegende Gesichtspunkte für die Dimensionierung eines derartigen Motorwagen-Bremsventils erläutert.

Die Dimensionierung der Feder und des Kolbens ist durch den auszusteuernden Bremsdruck und die Forderung nach der Genauigkeit, mit der er einzuhalten ist, vorgegeben. Die auf diese Weise einzuhaltende Hysterese für den Bremsdruck und die Luftmenge, die von den Ventilsitzen auszusteuern ist, bedingt, daß bei der Wahl der Fläche des Kolbens eine bestimmte untere Grenze nicht überschritten werden darf. Aufgrund dieser Fläche und des maximalen Bremsdruckes ergibt sich die maximale Federkraft $F_{max}$, die die Feder zu erbringen hat.

Nach der Bestimmung der maximalen Federkraft $F_{max}$ ist der dieser Kraft zugeordnete maximale Federweg $s_{max}$ zu bestimmen [Festlegung der Federkonstanten]. Soll, wie dies bei dem erfindungsgemäßen Bremswertgeber der Fall ist, der Federweg gleichzeitig mit einer für die Belange der Fahrzeug-Steuereinrichtung ausreichenden Auflösung sensiert werden, so ergibt sich ein bestimmter Wert des maximalen Federweges $s_{max}$, der nicht unterschritten werden darf. So ist aus diesen grundsätzlichen Dimensionierungsüberlegungen die maximale Federkraft $F_{max}$ und der maximale Federweg $s_{max}$ festgelegt.

Bei Aussteuerung des maximalen Bremsdruckes wird die Feder daher derart zusammengedrückt, daß in ihr eine potentielle Energie von

$$E=\frac{1}{2}\cdot s_{max}\cdot F_{max} \qquad [1]$$

gespeichert ist.

Diese Energie wird vom Fahrer erzeugt, indem er am Bremspedal die Fußkraft $F_{1max}$ erzeugt und am Bremspedal den Weg $s_{1max}$ zurücklegt. Am Bremspedal findet eine Hebelübersetzung von der Fußkraft $F_1$ zur Federkaft $F$ statt, wobei das Übersetzungsverhältnis $ü$ durch das Verhältnis der Hebellänge vom Angriffspunkt der Fußkraft zum Drehpunkt zur Hebellänge des Angriffspunktes der Feder zum Drehpunkt des Bremshebels gegeben ist.

Mit der auf diese Weise festgelegten Hebelübersetzung $ü$ ergibt sich für die maximale Fußkraft

$$F_{1max} = F_{max}/ü \qquad [2]$$

und für den maximalen Fußweg

$$s_{1max} = s_{max}\cdot ü \qquad [3]$$

Bei einem Motorwagen-Bremsventil entsprechend dem Stand der Technik mit einer Abstufungsfeder kann also eine konstruktiv vorgegebene maximale Federkraft durch die Wahl des Hebelübersetzungsverhältnisses $ü$ derart reduziert werden, daß der Fahrer nur den $ü$-ten Teil dieser Kraft mit seinem Fuß aufzubringen hat; gleichzeitig muß er aber den $ü$-fachen Betätigungsweg erbringen. Eine Kraftersparnis muß daher immer mit einer entsprechenden Zunahme des Weges erkauft werden.

Im Gegensatz zum Stand der Technik des genannten Motorwagen-Bremsventils wird in der Erfindung in der Ausgestaltung nach Fig. 4 ausgenützt, daß vom Bremswertgeber (1) nur ein Brems-Steuerdruck auszusteuern ist und hier die Fläche des Ventilkolbens (39) vergleichsweise wesentlich kleiner gewählt werden kann, da von dem Kolben keine großen, für eine entsprechende Luftmengenverstärkung erforderlichen, Ventilsitze anzusteuern sind. Mit den kleineren Ventilsitzen genügt eine kleinere Kolbenfläche, es genügt eine kleinere maximale Federkraft, und damit ist nur eine vergleichsweise schwache Feder mit kleiner potentieller Energie für die Pneumatik-Aussteuerung erforderlich.

Die zweite vergleichsweise starke Feder (21) dient zur Festlegung des Bremsen-Feelings für den Fahrer. Die maximale Federkraft dieser Feder kann völlig unabhängig von den pneumatischen Gegebenheiten, ganz ausgerichtet auf die Wünsche des Fahrzeugherstellers, erfolgen. Mit der freien Wahl dieser Maximalkraft und ihrer Umsetzung für die Fahrer-Betätigung unter Verwendung von einem geeignet gewählten Hebelübersetzungsverhältnis $ü$ kann das Bremsen-Feeling in weiten Grenzen den unterschiedlichen Wünschen der Fahrzeughersteller entsprochen werden. Bei Änderungen ist, bezogen auf den Bremswertgeber, nur der Austausch der zweiten Feder (21) erforderlich.

Damit der Fahrer am Bremspedal an einem leichten Druckpunkt den Bremsbeginn spürt, ist es vorteilhaft, die zweite Feder (21) in leicht vorgespanntem Zustand einzubauen.

Da über die zweite Feder (21) der Betätigungsweg und die Betätigungskraft eindeutig verknüpft sind, ist es möglich, statt des Wegsensors (2) einen Sensor vorzusehen, der die Kraft in der zweiten Feder (21) mißt. Die Abhängigkeit einer bestimmten Größe des Bremswertgebers vom Betätigungsweg ist damit gleichbedeutend mit der Abhängigkeit dieser Größe von der Betätigungskraft.

Bei dem Bremswertgeber nach Fig. 5 ist der vom Betätigungsstößel (6) ausgelenkte Betätigungsmechanismus inklusive der Federanordnung und die vom Betätigungselement (29) mechanisch gesteuerte pneumatische Ventileinrichtung durch die entsprechenden Erläuterungen des Bremswertgebers zu Fig. 4 bereits dargelegt. Am Ventilkolben (39) nach Fig. 5 wird der Bremsluft-Druckraum (41) durch eine Kolbendichtung (34) von einem Steuerluft-Druckraum (38) abgetrennt. Ein krafteinleitendes Zwischenstück (35) dient zur Übertragung der von der ersten Feder (20) erzeugten Kraft auf den Ventilkolben (39). Auf diesen Kolben wirkt so einmal die Kraft der ersten Feder (21) und zum anderen der im Steuerluft-Druckraum (38) herrschende Druck ein.

Am Steuerdruck-Eingang (10) ist der vom Bremsdruckmodulator erzeugte Druck angelegt, der am Steuerdruck-Ausgang (30) anliegende Druck wird zu dem externen Relaisventil geleitet.

Der Ventilkolben (39) stellt daher ein Additionsglied dar, für das wiederum zwei Eingänge von physikalischen Größen vorgesehen sind, wobei die erste physikalische Größe vom Betätigungsweg abgeleitet ist und eine Kraft darstellt, und die zweite physikalische Größe von einem Ausgang der Fahrzeug-Steuereinrichtung abgeleitet ist und einen Druck darstellt.

Ist eine Ausgestaltung des Bremswertgebers für immer einen gleichen Kunden erwünscht, der ein bestimmtes Bremsen-Feeling fordert, so kann es sinnvoll sein, auf die im Zusammenhang mit den Erläuterungen zu Fig. 4 beschriebene Bestimmung des Bremsen-Feelings durch Festlegung der zweiten Feder (21) zu verzichten. Der Durchmesser des Ventilkolbens (39) kann dann derart vergrößert werden, daß auch Ventilsitze mit großer Luftleistung ansteuerbar sind. Dadurch verfügt der vom Bremswertgeber am "Steuerdruck-Ausgang" (30) abgegebene Druck über eine Luftleistung, die die Verwendung eines nachgeschalteten luftmengenverstärkenden Relaisventils überflüssig macht; ein derartiger Bremswertgeber ist in Fig. 2 gezeigt [der pneumatische Ausgang des Bremswertgebers stellt direkt den Relaisventil-Druckausgang (9) dar].

Entsprechend dem vergrößerten Kolbendurchmesser muß die erste Feder (20) entsprechend stark ausgeführt werden. In dem Maß, wie die erste Feder (20) verstärkt wird, muß die zweite Feder (21) verringert werden, da diese nun nicht mehr allein für die Bestimmung des Bremsen-Feelings verantwortlich ist.

Bei einem konventionellen Motorwagen-Bremsventil bestehen, wie erläutert, bestimmte Verknüpfungen von Luftmenge, Ventilgröße und Steuerkolben-Durchmesser, die zu einer bestimmten Hysterese führen. Diese Verknüpfungen bestehen grundsätzlich auch für den erfindungsgemäßen Bremswertgeber, jedoch wirkt sich eine erhöhte Hysterese der mechanischen Druckkomponente, die bei kleinerem Steuerkolben entsteht, nicht auf das Bremsverhalten aus. Die elektrische Druckkomponente wird nämlich, wie unten näher ausgeführt ist, durch die elektronische Bremswertregelung derart eingestellt, daß der gewünschte Gesamt-Bremsdruck erreicht wird.

In Fig. 6a stellt, wie bereits vorstehend erwähnt, das Geradenstück (50) die mechanisch erzeugte Druckkomponente, nämlich den Redundanz-Bremsdruck in Abhängigkeit des Betätigungsweges $s$ dar. Der Fußpunkt des Geradenstückes liegt bei einem Betätigungsweg von $\Delta s$, da für kleinere Betätigungswege kein Redundanz-Druck ausgesteuert wird. Das Geradenstück erstreckt sich von dem Fußpunkt mit einer bestimmten Steigung, die vorstehend erläutert ist, bis zu einem Betätigungsweg $s_A$, bei dem entsprechend Fig. 4 die zapfenförmige Erweiterung (18) der Druckplatte (23) an dem Magnetanker (25) anschlägt.

Ist der Anschlag einmal erreicht, so wirkt die Druckplatte (23) direkt auf den Magnetanker (25) ein, so daß durch jede kleinste weitere Vergrößerung des Betätigungsweges der Belüftungssitz (26, 32) direkt geöffnet wird und der Druck "schlagartig" anwächst; an dieser Stelle geht die Wegsteuerung des pneumatischen Ventils in eine Kraftsteuerung über, wie dies durch das Geradenstück (51) gezeigt ist.

Der Fahrer steuert in diesem Bereich den Bremsdruck durch seine Fußbetätigungskraft aus. Dieses Verhalten ist deshalb unproblematisch, da der Kennlinien-Ast entsprechend dem Geradenstück (51) nur zur Wirkung kommt, wenn z. B. durch einen Elektronikausfall die elektronisch erzeugte Bremsdruckkomponente ausfällt und der Redundanz-Druck wirksam wird. Tritt dieser Notfall während einer Bremsung ein, so bemerkt der Fahrer, während er die Bremse betätigt, daß der Bremsdruck plötzlich nachläßt [bei einem in Fig. 6a gezeigten Betätigungsweg $s_X$ verringert sich der Bremsdruck entsprechend dem Arbeitspunkt (58) auf der unten erläuterten Kurve des Gesamt-Bremsdruckes (52) auf den Druck im Arbeitspunkt (59) auf dem Geradenstück (50)], worauf der Fahrer intuitiv die Bremse verstärkt betätigt und über dem Kennlinien-Ast (51) den Vorratsdruck als maximalen Bremsdruck aussteuert. Wichtig ist, daß der Fahrer in einem solchen Notfall jederzeit bei Bedarf eine Vollbremsung sicher durchführen kann; eine Stufigkeit beim Übergang vom Kennlinien-Ast (50) auf den Kennlinien-Ast (51) ist dabei unerheblich.

Die Kombination der Kennlinienäste (50) und (51) stellt die Kennlinie der mechanisch erzeugten Druckkomponente dar.

Bisher wurde auf das Bremsverhalten bei Überschreitung der Schwelle $\Delta s$ eingegangen, wenn immer eine mechanische Druckkomponente ausgesteuert wird; dies bedeutet, daß Bremszylinder der Reibungsbremse des Fahrzeuges mit einem Bremsdruck beaufschlagt werden. Neben dieser verschleißbehafteten Bremse verfügen viele Fahrzeuge auch über eine verschleißfreie Bremse, die z. B. in Form eines Retarders ausgeführt ist.

Bei nur leichter Betätigung des Bremspedals, d. h. bei Betätigungswegen kleiner als $\Delta s$, soll nur die verschleißfreie Bremse betätigt sein. Dies ist dadurch möglich, daß der Sensor (2) auch für diese Bremsbetätigungen ein entsprechendes Signal an die Fahrzeug-Steuereinrichtung (7) abgibt. Die Fahrzeug-Steuereinrichtung (7) wertet das Sensorsignal aus und steuert entsprechend der Größe des Sensor-Meßwertes z. B. den Retarder des Fahrzeuges an [da dieser Teil der Fahrzeug-Steuereinrichtung (2) nicht Teil der Erfindung ist, ist die Ansteuerung einer verschleißfrei wirkenden Bremse in den Zeichnungen nicht angegeben].

Fig. 6b zeigt beispielsweise die Wirkung einer verschleißfrei wirkenden Bremse: Von einem Betätigungsweg von Null steigt der verschleißfreie Bremsanteil zunächst linear an (53) und erreicht bei dem Betätigungsweg von $\Delta s$ sein Maximum, wobei angenommen wird, daß dieser Wert der maximalen Ansteuerung des Retarders entspricht. Bei Betätigungswegen von größer als $\Delta s$ bleibt dieser maximale verschleißfreie Bremsanteil (54) erhalten [an der Ordinate von Fig. 6b ist keine Einheit angegeben; es wird hier der verschleißfreie Bremsanteil der gesamten Bremsanforderung in einer Größe dargestellt, die sinngemäß äquivalent zu der in Fig. 6a dargestellten Größe der Ordinate ist, welche dort das Verhältnis des Bremsdruckes $p_B$ zu dem Versorgungsdruck $p_V$ beträgt].

In Fig. 6a stellt, wie oben angedeutet, die Kurve (52) den Gesamt-Bremsdruck der Verschleißbremse dar, der gleich der Summe der von dem Bremsdruckmodulator (3) erzeugten elektrischen Druckkomponente und der mechanischen Druckkomponente ist. Wie erwähnt, nimmt die Fahrzeug-Steuereinrichtung (7) eine Auswertung des vom Sensor (2) gelieferten Meßwertes vor, indem sie dieses Signal als generelles Bremsanforderungssignal betrachtet und den Bremskomponenten im Fahrzeug entsprechende Einzel-Bremsanforderungen zuteilt. So wird zum einen, wie erwähnt, der verschleißfrei wirkenden Bremse der Teil der Bremsanforderung übertragen, den diese zu erfüllen imstande ist, und der verbleibende Anteil wird der Verschleißbremse zugeordnet. Innerhalb der Verschleißbremse wird eine Aufteilung in Bremsanteile für die Vorder- und die Hinterachse vorgenommen, wozu die Ist-Belagdicke abgefragt wird, damit in einem, bezogen auf den Druck, unteren Abbremsbereich eine dem Verschleiß Rechnung tragende Druckverteilung vorgenommenen wird, während im höheren Abbremsbereich z. B. die Beladung des Fahrzeugs herangezogen wird.

Die Art und Weise dieser Zuordnungen ist als solche bekannt, so daß hier ausschließlich auf das generelle Zusammenwirken der Bremskennlinien eingegangen wird.

Die Kurve (52) des Gesamt-Bremsdruckes am Beispiel für die Bremszylinder der Vorderachse zeigt bei kleineren Betätigungswegen [kleine Werte $s - \Delta s$] einen etwa linearen Verlauf; in diesem Bereich ist eine gute Stufung wünschenswert. Bei großen Betätigungswegen steigt der Bremsdruck zunehmend steil an und erreicht bei einem Betätigungsweg von $s_M$ den Versorgungsdruck; dieses Verhalten kommt dem Fahrerwunsch nahe, bei Notbremsungen möglichst schnell den maximalen Bremsdruck zu erreichen.

Die Differenz zwischen der Kurve (52) des Gesamt-Bremsdruckes und der mechanischen Druckkomponente (50) [der Redundanz-Druck] stellt die elektrische Druckkomponente dar.

Ein wesentlicher Vorteil der Erfindung besteht hier darin, daß die Ausgestaltung der elektrischen Druckkomponente über dem Betätigungsweg völlig unabhängig von den konstruktiven Gegebenheiten des Bremswertgebers bestimmt werden kann. Auf diese Weise kann den unterschiedlichen Fahrzeug-Anforderungen und den unterschiedlichen Vorstellungen der Fahrzeughersteller entsprochen werden, ohne daß konstruktive Änderungen am Bremswertgeber vorzunehmen sind.

Die gesamte am Fahrzeug erbrachte Abbremsung über dem Betätigungsweg entspricht der Summe aus der Kennlinie der verschleißfreien Bremse mit den Ästen (53, 54) nach Fig. 6b und der Kennlinie des Gesamt-Bremsdruckes (52) nach Fig. 6a.

Der in Fig. 6a dargestellte Funktionsverlauf des mechanisch erzeugten Redundanz-Druckes über dem Betätigungsweg mit dem geneigten Kennlinienast (50) und dem senkrechten Kennlinienast (51) gilt auch für die Ausführung des Bremswertgebers nach Fig. 5; bei dieser Ausführungsform ist der mechanische Anschlag $s_A$ erreicht, wenn die Unterkante der Druckplatte (23) mit der Oberkante des Zwischenstückes (35) zur Anlage kommt.

Die bisher erläuterten Ausführungsformen des erfindungsgemäßen Bremswertgebers beruhen, wie oben erwähnt, auf einer einkreisigen Redundanz. Ein Bremswertgeber mit zweikreisiger Redundanz ist durch Integration einer weiteren Drucksteuerstufe zur Erzeugung einer weiteren Bremsdruckkomponente zu realisieren, die unabhängig von der erläuterten mechanischen Druckerzeugungseinrichtung zur Bildung des Additionsredundanzdruckes für die Vorderachse wirkt, wobei der von ihr erzeugte Druck als Redundanz-Druck für die Hinterachse -vorzugsweise als geschaltete Redundanz- vorgesehen ist.

Aus dem Motorwagen-Bremsventil nach der Schrift DE-A1-42 32 146 ist bekannt, wie bei einer Betätigung des Bremsventils zunächst über eine erste Arbeitskammer [dort erste Arbeitskammer (60)] der als Hinterachskreis ausgestaltete erste Bremskreis mit Druck beaufschlagt wird. Über eine zweite Arbeitskammer [dort zweite Arbeitskammer (44)] wird Druck für den als Vorderachskreis ausgebildeten zweiten Bremskreis ausgesteuert. Die zweite Arbeitskammer ist mit der ersten Arbeitskammer pneumatisch verbunden, so daß bei Aussteuerung eines Druckes auf der ersten Arbeitskammer gleichzeitig ein Druck in der zweiten Arbeitskammer ausgesteuert wird. Zusätzlich besteht eine mechanische Kopplung zwischen der ersten und der zweiten Arbeitskammer dergestalt, daß bei Ausfall des Druckes in der ersten Arbeitskammer der Druck in der zweiten Arbeitskammer nun aufgrund der mechanischen Kopplung ausgesteuert wird.

Der erfindungsgemäße Bremswertgeber, z. B. nach Fig. 4, läßt sich unter Verwendung dieses bekannten Prinzips zu einem Bremswertgeber mit zweikreisiger Redundanz erweitern. Die erwähnte weitere Drucksteuerstufe wird als erste Drucksteuerstufe direkt von der Druckplatte (23) betätigt, indem ein entsprechender erster weiterer Ventilkolben eingebaut wird, der Einlaß- und Auslaßsitze der weiteren Drucksteuerstufe aktiviert. Statt mit der ersten Feder (20) wird der erste weitere Ventilkolben mit einer weiteren, dem Reduanz-Druck entsprechenden Feder [schwache Feder ohne Baulängen-Verkürzung] von der Druckplatte (23) mit Kraft beaufschlagt; die starke zweite Feder (21) wirkt weiter als "Feeling"-Feder. Für die weitere Drucksteuerstufe wird eine zusätzliche Arbeitskammer gebildet, indem ein zweiter weiterer Ventilkolben vorgesehen ist, der mit dem Druck der weiteren Drucksteuerstufe beaufschlagt wird.

Unterhalb der Arbeitskammer dieser neu eingefügten Drucksteuerstufe befindet sich die beschriebene Anordnung aus magnetgesteuertem Anker (25) und den vom Anker ausgesteuerten Ventilteilen (26, 27, 28).

Vom weiteren Drucksteuerkreis wird die erste Feder (20) betätigt, indem man den vom weiteren Druckkreis ausgesteuerten Druck über den zweiten weiteren Ventilkolben auf diese Feder wirken läßt. Der verzögerte Druckanstieg läßt sich in diesem Fall nicht mit einer Baulängenverkürzung erreichen, sondern dadurch, daß die erste Feder (20) ohne Baulängenverkürzung eingebaut und entsprechend des gewünschten verzögerten Druckanstieges vorgespannt ist. Gleichzeitig wird bei Ausfall des Druckes im weiteren Drucksteuerkreis durch Verschieben des Betätigungsstößels (6) eine starre Kopplung zum Magnetanker (25) hergestellt, so daß dieser, wie erläutert, verschoben wird [vergl. Erläuterungen zu Fig.4], um den Additions-Redundanz-Druck mechanisch zu erzeugen.

Bei dem erfindungsgemäßen Bremswertgeber wird, wie erläutert, eine Druckkomponente mit mechanischen und eine Druckkomponenten mit elektrischen Mitteln erzeugt. Für die mit elektrischen Mitteln erzeugte Druckkomponente wird ein Aktuator verwendet, dem das physikalische Wirkprinzip zugrunde liegt, aus der elektrischen Größe eines Stromes über einen Magneten eine Kraft zu erzeugen. Die so erzeugte Kraft bewirkt eine Verschiebung von mechanischen Elementen in Dichtsitzen, wodurch an den Dichtsitzen offene Querschnitte gebildet werden, durch die Druckluft ein- bzw. ausströmen kann, um die gewünschte Druckveränderung durchzuführen.

Verallgemeinert können auch Aktuatoren mit anderem Wirkprinzip eingesetzt werden, z. B. Aktuatoren nach dem Piezo-Prinzip. Bei einem derartigen Aktuator wird an einem Piezoelement aufgrund einer an das Element angelegten elektrischen Spannung ein Luftspalt ausgesteuert. Dieser kann in der erläuterten Weise für Druckauf- bzw. Druckabbauvorgänge verwendet werden.

Die Auswahl eines für einen Anwendungsfall geeigneten Aktuator-Wirkprinzips hängt von den Anforderungen des jeweiligen Anwendungsfalles ab. Die Erfindung ist deshalb nicht auf ein bestimmtes Wirkprinzip begrenzt; wichig ist allein, daß für die Bildung der elektrischen Druckkomponente irgendein physikalisches Wirkprinzip verwendet wird, das eine elektrische in eine mechanische Größe umwandelt, die zur Erzeugung der Druckkomponente dient.

**Patentansprüche**

1.  Bremswertgeber (1) für ein in einem druckluftgebremsten Fahrzeug angeordnetes, aus mindestens einem Modul bestehendes Bremssystem, welches über eine elektronische Bremswertregelung verfügt und bei dem ein am Bremswertgeber (1) angeordneter Sensor-Ausgang (14) mit einem Eingang einer Steuereinrichtung (7) für das Fahrzeug verbunden ist, welche über mindestens einen Ausgang (15) verfügt, wobei mindestens ein Bremskreis des Bremssystems entsprechend dem Prinzip der Additionsredundanz redundant ausgeführt ist, mit folgenden Merkmalen:

    a) Der Bremswertgeber (1) dient zur Erzeugung eines Bremsdruckes;

    b) der Bremswertgeber (1) wird vom Fahrer betätigt;

    c) es ist eine Einrichtung (29, 27, 26, 32, 28) zur Erzeugung des Bremsdruckes vorgesehen, welche mit dem Bremswertgeber (1) baulich vereinigt ist;

    d) die Druckerzeugungs-Einrichtung (29, 27, 26, 32, 28) weist einen Eingang für eine erste physikalische Größe auf;

    e) die erste physikalische Größe ist von der Fahrer-Betätigung abgeleitet;

    f) es ist eine im Bremswertgeber (1) integrierte Sensor-Einrichtung zur Erfassung der Fahrer-Betätigung vorgesehen, die mit dem Sensor-Ausgang (14) verbunden ist;

    g) die Druckerzeugungs-Einrichtung (29, 27, 26, 32, 28) weist einen weiteren Eingang (15, 42) für eine zweite physikalische Größe auf;

    h) die zweite physikalische Größe ist abgeleitet von einem von der Fahrzeug-Steuereinrichtung (7) erzeugten und über einen Ausgang (15) der Fahrzeug-Steuereinrichtung (7) dem Bremswertgeber (1) zugeführten Steuersignal;

    i) zur Summenbildung der Wirkungen aus der ersten und der zweiten physikalischen Größe ist eine im Bremswertgeber (1) integrierte Additionseinrichtung vorgesehen.

2.  Bremswertgeber (1) nach Anspruch 1, **dadurch gekennzeichnet, daß** die erste physikalische Größe aus einer Kraft besteht.

3.  Bremswertgeber (1) nach Anspruch 1, **dadurch gekennzeichnet, daß** die zweite physikalische Größe aus einer Kraft besteht.

4.  Bremswertgeber (1) nach Anspruch 1 oder 2, **dadurch gekennzeichnet, daß** die zweite physikalische Größe aus einem Druck besteht.

5.  Bremswertgeber (1) nach einem der Ansprüche 1 bis 4, **dadurch gekennzeichnet, daß** die Additionseinrichtung aus dem Anker (25) eines magnetgesteuerten Ventiles gebildet ist.

6.  Bremswertgeber (1) nach einem der Ansprüche 1 bis 4, **dadurch gekennzeichnet, daß** die Additionseinrichtung durch den Kolben (39) eines Ventils gebildet ist.

7. Bremswertgeber (1) nach Anspruch 5 oder 6, **dadurch gekennzeichnet, daß** zur Erzeugung einer der Fahrer-Betätigung entsprechenden Kraft und ihrer Übertragung auf die Additionseinrichtung eine erste Federeinrichtung (20) vorgesehen ist.

8. Bremswertgeber (1) nach Anspruch 7, **dadurch gekennzeichnet, daß** durch eine Verkürzung der Baulänge der ersten Federeinrichtung (20) der einer bestimmten Fahrer-Betätigung zugeordnete Beginn der Aussteuerung des Bremsdruckes bestimmt ist.

9. Bremswertgeber (1) nach einem der vorstehenden Ansprüche, **dadurch gekennzeichnet, daß** eine zweite, die Kennlinie der Brems-Anforderung bestimmende Federeinrichtung (21) vorgesehen ist.

10. Bremswertgeber nach Anspruch 4, **dadurch gekennzeichnet, daß** zur Druckerzeugung eine Drucksteuereinrichtung (3) aus einer Kombination von geschalteten, mindestens aus je einem belüftenden und einem entlüftenden Ventil bestehenden Magnetventilen vorgesehen ist.

11. Bremswertgeber nach Anspruch 10, **dadurch gekennzeichnet, daß** die Drucksteuereinrichtung (3) mit dem Bremswertgeber (1) baulich vereinigt ist.

12. Bremswertgeber nach einem der vorstehenden Ansprüche, **dadurch gekennzeichnet, daß** mindestens derjenige Teil der Fahrzeug-Steuereinrichtung (7), welcher der Bremsung zugeordnet ist, mit dem Bremswertgeber (1) baulich vereinigt ist.

13. Bremswertgeber (1) nach einem der vorstehenden Ansprüche, **dadurch gekennzeichnet, daß** mit der Druckerzeugungseinrichtung (29, 27, 26, 32, 28) und der Additionseinrichtung (25, 39) eine einkreisige Redundanz realisiert ist, bei der für einen Bremskreis eine erste, nur mit mechanischen Mitteln erzeugte, und eine zweite, aufgrund eines Steuersignals der Fahrzeug-Steuereinrichtung erzeugte Bremsdruckkomponente vorgesehen sind, und beim Ausfall der zweiten Bremsdruckkomponente die erste Bremsdruckkomponenten wirksam wird.

14. Bremswertgeber nach Anspruch 13, **dadurch gekennzeichnet, daß** der einkreisigen Redundanz das Prinzip der Additionsredundanz zugrunde liegt, bei dem der vom Bremswertgeber (1) ausgesteuerte Bremsdruck als Summe der Drücke aus der ersten und der zweiten Bremsdruckkomponente gebildet ist.

15. Bremswertgeber nach einem der vorstehenden Ansprüche mit folgenden Merkmalen:

a) Es ist eine weitere Einrichtung zur Erzeugung eines Bremsdruckes vorgesehen;

b) der von der weiteren Druckerzeugungs-Einrichtung erzeugte Druck ist durch die Fahrer-Betätigung bestimmt.

16. Bremswertgeber nach Anspruch 15, **dadurch gekennzeichnet, daß** mit der weiteren Druckerzeugungs-Einrichtung eine zweikreisige Redundanz realisiert ist, bei der für zwei Bremskreise je eine erste, nur mit mechanischen Mitteln erzeugte, und je eine zweite, aufgrund je eines Steuersignals der Fahrzeug-Steuereinrichtung erzeugte Bremsdruckkomponente vorgesehen sind, und beim Ausfall der zweiten Bremsdruckkomponente für einen Bremskreis die erste Bremsdruckkomponente dieses Bremskreises wirksam wird.

17. Bremswertgeber nach Anspruch 16, **dadurch gekennzeichnet, daß** der Redundanz der weiteren Druckerzeugungs-Einrichtung das Prinzip der geschalteten Redundanz zugrunde liegt, bei der beim Ausfall der zweiten Bremsdruckkomponente für einen Bremskreis eine Abschaltung der zweiten Bremsdruckkomponente und eine Zuschaltung der ersten Bremsdruckkomponente dieses Bremskreises stattfindet.

**Claims**

1. Braking value generator (1) for a brake system arranged in a compressed air-braked vehicle and comprising at least one module, which brake system has an electronic braking value control and in which a sensor output (14) arranged at the braking value generator (1) is connected with an input of a control device (7) for the vehicle, the control device having at least one output (15), wherein at least one brake circuit of the brake system is of redundant construction according to the principle of adding redundancy, having the following features:

a) the braking value generator (1) serves to generate a brake pressure;

b) the braking value generator (1) is operated by the driver;

c) an arrangement (29, 27, 26, 32, 28) for generating the brake pressure is provided, which is structurally combined with the braking value generator (1);

d) the pressure-generating arrangement (29, 27, 26, 32, 28) comprises an input for a first physical parameter;

e) the first physical parameter is driver actuation-derived;

f) a sensor device integrated in the braking value generator (1) is provided for detecting driver actuation, which device is connected with the sensor output (14);

g) the pressure-generating arrangement (29, 27, 26, 32, 28) comprises a further input (15, 42) for a second physical parameter;

h) the second physical parameter is derived from a control signal generated by the vehicle control device (7) and a supplied via an output (15) of the vehicle control device (7) to the braking value generator (1);

i) to form the sum of the effects of the first and the second physical parameter, an addition device integrated in the braking value generator (1) is provided.

2. Braking value generator (1) according to claim 1, **characterised in that** the first physical parameter comprises a force.

3. Braking value generator (1) according to claim 1, **characterised in that** the second physical parameter comprises a force.

4. Braking value generator (1) according to claim 1 or 2, **characterised in that** the second physical parameter comprises a pressure.

5. Braking value generator (1) according to any one of claims 1 to 4, **characterised in that** the addition device is formed from the armature (2) of a magnetically controlled valve.

6. Braking value generator (1) according to any one of claims 1 to 4, **characterised in that** the addition device is formed by the piston (39) of a valve.

7. Braking value generator (1) according to claim 5 or 6, **characterised in that** a first spring device (20) is provided to generate a force corresponding to driver actuation to transfer it to the addition device.

8. Braking value generator (1) according to claim 7, **characterised in that** the commencement of delivery of the brake pressure associated with a specific driver actuation is determined by shortening the overall length of the first spring device (20).

9. Braking value generator (1) according to any one of the preceding claims, **characterised in that** a second spring device (21) determining the characteristic of the braking requirement is provided.

10. Braking value generator according to claim 4, **characterised in that** a pressure control device (3) comprising a combination of switchable solenoid valves consisting at least of one aspiration valve and one vent valve each is provided.

11. Braking value generator according to claim 10, **characterised in that** the pressure control device (3) is structurally combined with the braking value generator (1).

12. Braking value generator according to any one of the preceding claims, **characterised in that** at least the part of the vehicle control device (7) that is associated with braking is structurally combined with the braking value generator (1).

13. Braking value generator (1) according to any one of the preceding claims, **characterised in that** a single circuit redundancy is realised with the pressure-generating arrangement (29, 27, 26, 32, 28) and the addition device (25, 39), in which for one brake circuit a first brake pressure component generated only by mechanical means and a second brake pressure component generated on the basis of a control signal of the vehicle control device are provided, and on failure of the second brake pressure component the first brake pressure component becomes effective.

14. Braking value generator according to claim 13, **characterised in that** the single-circuit redundancy is based on the principle of adding redundancy, in which the brake pressure delivered from the braking value generator (1) is formed as the sum of the pressures from the first and the second brake pressure components

15. Braking value generator according to any one of the preceding claims, having the following features:

a) a further device for generating a brake pressure is provided;

b) the pressure generated by the further pressure-generating device is determined by driver actuation.

16. Braking value generator according to claim 15, **characterised in that** a dual circuit redundancy is realised with the further pressure-generating device, in which for two brake circuits a respective first brake pressure component generated only by mechanical means and a respective second brake pressure component generated on the basis of a respective control signal of the vehicle control device are provided, and on failure of the second brake pressure component for a brake circuit the first brake pressure component of that brake circuit becomes effective.

17. Braking value generator according to claim 16, **characterised in that** the redundancy of the further pressure-generating device is based on the principle of switched redundancy, in which, on failure of the second brake pressure component for a brake circuit, the second brake pressure component is switched out and the first brake pressure component of that brake circuit is switched in.

## Revendications

1. Générateur de valeur de freinage (1) pour un système de freinage agencé dans un véhicule freiné par voie pneumatique et constitué par au moins un module, système qui dispose d'une régulation électronique de la valeur de freinage et dans lequel une sortie de détecteur (14) agencée sur le générateur de valeur de freinage (1) est reliée à une entrée d'un dispositif de commande (7) pour le véhicule, qui dispose d'au moins une sortie (15), au moins un circuit de freinage du système de freinage étant réalisé de façon redondante selon le principe de la redondance par addition, comprenant les éléments suivants :

   a) le générateur de valeur de freinage (1) sert à générer une pression de freinage ;
   b) le générateur de valeur de freinage (1) est actionné par le conducteur ;
   c) il est prévu un système (29, 27, 26, 32, 28) pour générer la pression de freinage, qui est structurellement réuni avec le générateur de valeur de freinage (1) ;
   d) le système de génération de pression (29, 27, 26, 32, 28) comprend une entrée pour une première grandeur physique ;
   e) la première grandeur physique est dérivée de l'actionnement par le conducteur ;
   f) il est prévu un dispositif à détecteur pour détecter l'actionnement par le conducteur, qui est intégré dans le générateur de valeur de freinage (1) et qui est relié à la sortie de détecteur (14) ;
   g) le système de génération de pression (29, 27, 26, 32, 28) comprend une autre entrée (15, 42) pour une deuxième grandeur physique ;
   h) la deuxième grandeur physique est dérivée d'un signal de commande généré par le dispositif de commande (7) du véhicule et amené au générateur de valeur de freinage (1) via une sortie (15) au dispositif de commande (7) du véhicule ;
   i) pour la sommation des effets à partir de la première grandeur physique et de la deuxième grandeur physique, il est prévu un dispositif d'addition intégré dans le générateur de valeur de freinage (1).

2. Générateur de valeur de freinage (1) selon la revendication 1, **caractérisé en ce que** la première grandeur physique est constituée par une force.

3. Générateur de valeur de freinage (1) selon la revendication 1, **caractérisé en ce que** la deuxième grandeur physique est constituée par une force.

4. Générateur de valeur de freinage (1) selon l'une ou l'autre des revendications 1 et 2, **caractérisé en ce que** la deuxième grandeur physique est constituée par une pression.

5. Générateur de valeur de freinage (1) selon l'une des revendications 1 à 4, **caractérisé en ce que** le dispositif d'addition est formé par l'induit (25) d'une valve à commande magnétique.

6. Générateur de valeur de freinage (1) selon l'une des revendications 1 à 4, **caractérisé en ce que** le dispositif d'addition est formé par le piston (39) d'une valve.

7. Générateur de valeur de freinage (1) selon l'une ou l'autre des revendications 5 et 6, **caractérisé en ce que** pour générer une force correspondante à l'actionnement par le conducteur et pour la transmettre au dispositif d'addition, il est prévu un premier dispositif à ressort (20).

8. Générateur de valeur de freinage (1) selon la revendication 7, **caractérisé en ce que** par un raccourcissement de la longueur structurelle du premier dispositif à ressort (20), on peut déterminer le début de la régulation de la pression de freinage associée à un certain actionnement par le conducteur.

9. Générateur de valeur de freinage (1) selon l'une des revendications précédentes, **caractérisé en ce qu'**il est prévu un deuxième dispositif à ressort (21) déterminant la courbe caractéristique de la demande de freinage.

10. Générateur de valeur de freinage selon la revendication 4, **caractérisé en ce que** pour générer la pression, il est prévu un dispositif de commande de pression (3) à partir d'une combinaison de valves magnétiques branchées, constituées par au moins une valve de mise à l'air et par une valve de purge.

11. Générateur de valeur de freinage selon la revendication 10, **caractérisé en ce que** le dispositif de commande de pression (3) est réuni structurellement avec le générateur de valeur de freinage (1).

**12.** Générateur de valeur de freinage selon l'une des revendications précédentes, **caractérisé en ce qu'**au moins cette partie du dispositif de commande de véhicule (7) qui est associée au freinage est réunie structurellement avec le générateur de valeur de freinage (1).

**13.** Générateur de valeur de freinage (1) selon l'une des revendications précédentes, **caractérisé en ce qu'**au moyen du dispositif de génération de pression (29, 27, 26, 32, 28) et du dispositif d'addition (25, 39), on réalise une redondance à circuit unique, dans laquelle sont prévues une première composante de pression de freinage générée uniquement par des moyens mécaniques, et une deuxième composante de pression de freinage générée en raison d'un signal de commande du dispositif de commande de véhicule, et en cas de défaillance de la deuxième composante de pression de freinage, c'est la première composante de pression de freinage qui devient active.

**14.** Générateur de valeur de freinage selon la revendication 13, **caractérisé en ce que** le principe de la redondance par addition est sous-jacent à la redondance à circuit unique, principe dans lequel la pression de freinage régulée par le générateur de valeur de freinage (1) est formée comme somme des pressions de la première composante de pression de freinage et de la deuxième composante de pression de freinage.

**15.** Générateur de valeur de freinage selon l'une des revendications précédentes, comprenant les éléments suivants :

a) il est prévu un autre système pour générer une pression de freinage ;
b) la pression générée par l'autre système de génération de pression est déterminée par l'actionnement par le conducteur.

**16.** Générateur de valeur de freinage selon la revendication 15, **caractérisé en ce que** l'on réalise une redondance à deux circuits au moyen d'un autre système de génération de pression, dans laquelle sont prévues, pour deux circuits de freinage, une première composante de pression de freinage générée uniquement par des moyens mécaniques et une deuxième composante de pression de freinage générée en raison d'un signal de commande respectif du dispositif de commande de véhicule, et en cas de défaillance de la deuxième composante de pression de freinage, c'est la première composante de pression de freinage d'un circuit de freinage qui devient active pour ce circuit de freinage.

**17.** Générateur de valeur de freinage selon la revendication 16, **caractérisé en ce que** le principe de la redondance branchée est sous-jacent à la redondance de l'autre système de génération de pression, principe dans lequel, en cas de défaillance de la deuxième composante de pression de freinage pour un circuit de freinage, une coupure de la deuxième composante de pression de freinage et une mise en marche de la première composante de pression de freinage de ce circuit de freinage ont lieu.

Fig. 1

Fig. 2

Fig. 3

Fig. 4

Fig. 5

31 · 17 · 6 · 2 · 1 · 14 · 23 · 22 · Δs · 21 · 20 · 19 · 35 · 42 · 38 · 39 · 10 · 34 · 41 · 30 · 29 · 26 · 27 · 40 · 11 · 28 · 32 · 16 · 33

## Fig. 6a

$P_B/P_V$ Bremsanteil
verschleißbehaftet

1

52

58

51

59

50

$\Delta s$ $s_X$ $s_M$ $s_A$ Betätigungsweg

s

## Fig. 6b

Bremsanteil
verschleißfrei

54

53

$\Delta s$ $s_M$ $s_A$ Betätigungsweg

s